# EUROPEAN PATENT SPECIFICATION

(11) **EP 0 575 175 B1**
(45) Date of publication and mention of the grant of the patent: **25.08.1999**
(21) Application number: 93304740.9
(22) Date of filing: 17.06.1993
(51) Int. Cl.: H04L 25/48, G08B 26/00

(54) **Detection system**
Detektierungssystem
Système de détection

(30) Priority: 19.06.1992 GB 9213079
(43) Date of publication of application: 22.12.1993
(73) Proprietor: PROTEC FIRE DETECTION PLC, Nelson, Lancashire BB9 6RT (GB)
(72) Inventor: Mcardle, Dermot, Burnley, Lancashire BB10 4EN (GB); Lewis, Richard Malcolm, Burnley, Lancashire BB12 9PE (GB)
(74) Representative: Neill, Alastair William

(56) References cited:
- EP-A- 0 276 641
- WO-A-88/09026
- GB-A- 2 168 517

## Description

The present invention relates to a detection system and is concerned particularly, although not exclusively, with a fire detection system.

Conventional addressable alarm systems typically comprise a number of detectors, such as smoke or heat detectors, a number of alarm sirens, and/or a number of manually activated alarm devices. Each device forms part of an electrical circuit commonly known as a loop, the ends of the loop being connected to a central control panel. The devices each have a unique address code which is known to the control panel and, using these address codes, bi-directional communication between a control panel and individual devices on the loop is possible.

An advantage with this kind of system over less sophisticated systems in which each device stands alone or is only addressable as part of a group of devices having the same address, is that when a particular device is activated the control panel is able to identify exactly which device has activated, and therefore where in the building the activation has taken place. In addition, whilst the device has previously been activated when the value of a detected parameter has exceeded a predetermined threshold value stored in its own memory, the intelligent addressable system allows the control panel to compare the detected parameter with information stored in its memory, whilst taking into account the values of that parameter or other parameters detected by other devices in the vicinity of the activated device.

The control panel is thus able to better assess the likelihood that the device has activated needlessly, thus reducing the incidence of unwanted activation of sirens, water sprinklers and other emergency apparatus.

Conversely, if a number of devices are detecting values of one or more parameters which values are below that which would have been their individual threshold values, the control panel might interpret this as relating to a fire condition and activate emergency apparatus when no device on its own would have done so.

The use of an intelligent addressable system therefore allows a degree of intelligence to be built into an alarm system.

GB-A-2,168,517 (Gent Ltd) discloses a detection system for detecting an alarm condition, wherein the detection system comprises control means and at least one detection means, the control means and the detection means are arranged, in use, to communicate with each other electronically.

EP-A-0 276 641 (Cray Research) discloses a serial digital data transmission for use for example in telemetry using a biphase signal for the transmission which has been modulated to create different time intervals between phase reversals. Each unique or distinct interval duration represents an assigned binary code.

According to the present invention, there is provided a detection system for detecting an alarm condition, the detection system comprising control means and at least one detection means, the control means and the detection means being arranged, in use, to communicate with each other electronically at least partly by means of a digital signal comprising a number of electrical pulses and a number of spaces between the pulses characterised in that at least some of the pulses and the spaces in the digital signal are arranged to be one of four different lengths, which four different lengths represent the binary numbers 00, 01, 10 and 11.

Suitably, the lengths of at least some of the spaces in the signal are arranged to represent bits of data.

Suitably, at least some of the pulses and/or the spaces are arranged to be of different lengths, which lengths represent binary numbers.

Suitably, at least some of the pulses and/or the spaces may be arranged to be one of more than four different lengths, which different lengths represent different binary numbers.

Suitably, at least some of both the pulses and the spaces are arranged to be one of four different lengths, the four different lengths representing the binary numbers 00, 01, 10 and 11.

Suitably, the pulses are formed by transitions between values of an electrical parameter.

Suitably, the control means communicates with the detection means by means of a signal comprising pulses formed by transitions between levels of voltage in a transmission line extending between the control means and the detection means.

Suitably, the detection means communicates with the control means by means of a signal comprising pulses formed by transitions between levels of electrical current flowing in a transmission line between the control means and the detector means.

Suitably, there is a plurality of detection means in communication with the control means.

Suitably, the control means communicates with the detection means to monitor values of a parameter detected by the detection means.

Suitably, the control means communicates with the detection means to monitor a condition of the detection means.

Suitably, the control means communicates with the detection means by means of a signal, which signal comprises a message and an identification code of the detection means.

The invention may be carried into practice in various ways but an embodiment will now be described by way of example with reference to the accompanying diagrammatic drawings in which:
Figure 1 shows, schematically, a detection system according to an embodiment of the present invention;
Figures 2A and 2B show, schematically, portions of an electrical communication between a central control panel and a device;
Figures 3A to 3D represent schematically portions of a signal encoded differently;
Figure 4 shows portions of return data from a device to a control panel according to a prior art system;
Figure 5 shows portions of return data from a device to a control panel according to an embodiment of the present invention;
Figure 6A, shows a portion of a communication between a control panel and a device;
Figure 6B shows a portion of communication between a control panel and a device when a priority condition exists; and
Figures 7A to 7D shows schematically, portions of a loop arrangement for a detection system.

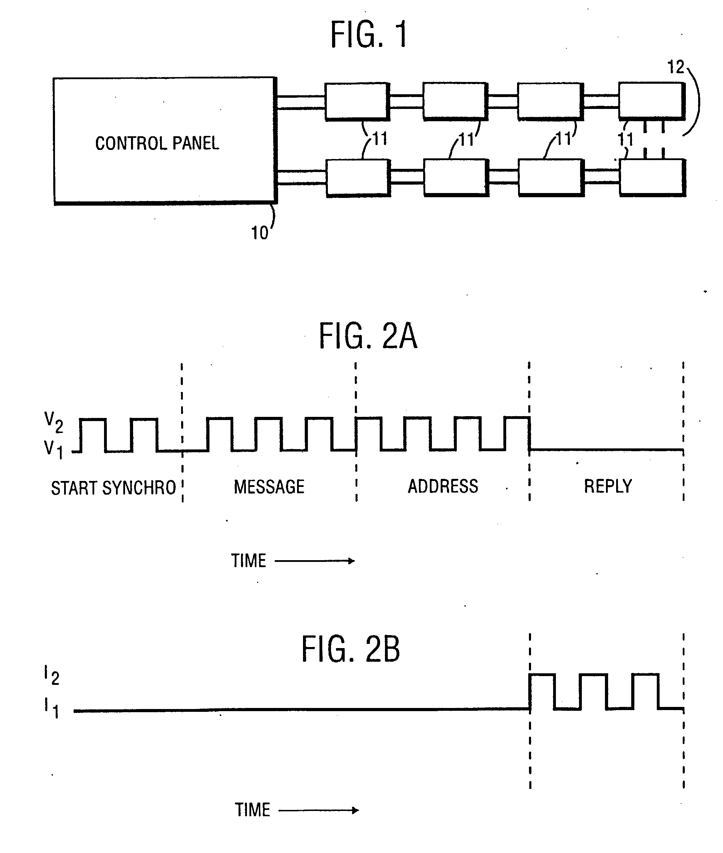

Referring to Figure 1, a detection system for use in a large building such as an office block, comprises a central control panel 10 and a number of individually addressable alarm devices 11. Typically there may be over a hundred alarm devices (only some of which are shown in the figure) arranged on a loop 12. In an alternative embodiment (not shown) there may be a plurality of loops, each having over a hundred devices, associated with the control panel 10. The alarm devices may, for example, comprise, in any combination, heat detectors, smoke detectors and manual call points such as can be activated manually by breaking of a glass case in the event of a fire. The alarm devices may be located at various points in the building.

During operation the control panel electronically communicates with the individual devices on the loop to obtain information about certain conditions such as temperature or the degree of smoke particles present in the atmosphere, which conditions are detected by the devices in order that the control panel may centrally monitor those conditions. By this means the control panel is able to determine the likelihood that a fire or other alarm condition exists.

During normal operation of the system, ie. when there is no alarm condition, the control panel sequentially interrogates each of the devices on the loop to determine whatever values of chosen parameter each device is currently measuring. The sequence of events which comprises the communication of the control panel with one device is termed the "the device addressing cycle".

Figure 2A shows, schematically, a digital electronic signal sent out from the control panel around the loop, which signal represents a single device addressing cycle. The pulses represent changes in voltage between values V1 and V2 on the loop. In the first portion 13 of the signal the control panel indicates that a new device addressing cycle is to begin and all of the devices re-synchronise to this portion of signal. In the second portion 14 of signal the control panel transmits a coded message and all devices monitor and decode this message. In the third portion 15 of the signal the control panel transmits a destination address for the message.

Each device has its own unique address code which the device compares with the destination address transmitted by the control panel. If the device's own address matches that transmitted by the control panel, then that device will act on the message. Devices whose addresses do not match that transmitted by the control panel ignore the message and await the next start/synchronising portion 13.

In the fourth portion 16 of signal the control panel remains silent and monitors the response from the selected device. The selected device transmits a response signal containing information requested by the control panel in the message portion 14 of the signal. The response signal from the device comprises a number of current pulses which are detected and decoded by the control panel as shown in figure 2B. The current pulses represent changes of current between current values I1 and I2.

The message from the control panel may require information from a device, such as the ambient temperature in the case of a heat sensor, or may require that the device takes action, such as commencing the ringing of a bell or the sprinkling of water.

In modern alarm systems it is desirable to transmit more detailed information between the control panel and the devices. However this means that the time taken for each device addressing cycle is increased, which is disadvantageous since for safety reasons it is important that the control panel inspects each device on the loop as often as possible in order to provide an early indication of an alarm condition.

One idea for solving this problem is to increase the speed at which the digital information is transmitted. However it is technically difficult to signal at high frequency over a long cable route using insulated copper cable, due to the effect on frequency of the capacitances and inductances associated with the cable. In addition, the more transitions that are made between voltage levels on the cable the more those capacitances are being charged and discharged which uses power inefficiently. A further problem with faster transmission of signals is that in order to produce faster rise and fall times, on leading and trailing edges of the signal pulses respectively, so that the pulses remain distinct, very high frequencies of electrical oscillation are needed. This disadvantageously leads to the generation of radio frequency interference.

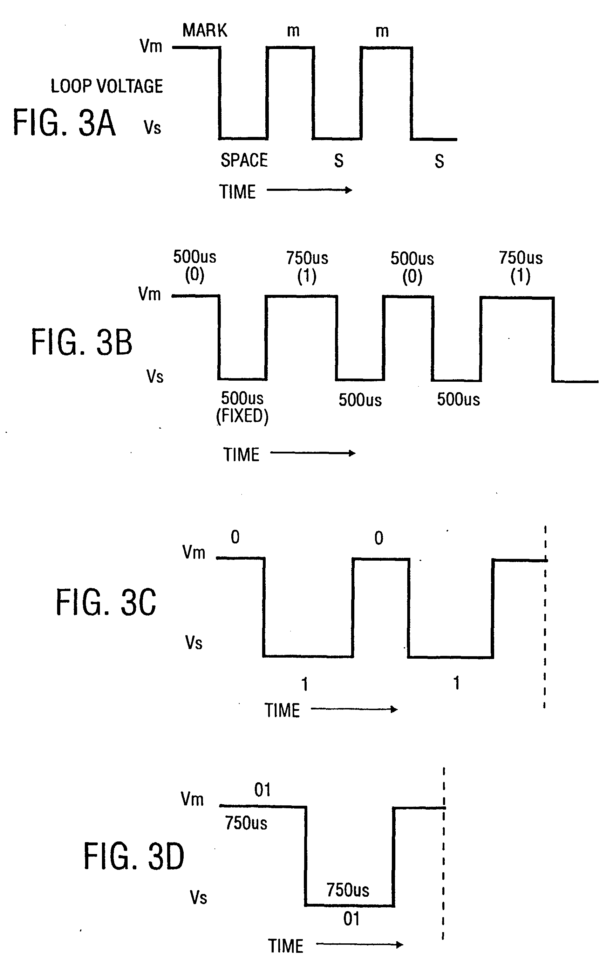

Referring to Figure 3A, this shows a typical portion of digital signal which might be transmitted down the loop from the control panel. The signal consists of a series of pulses which are changes in voltage between Vs a voltage level defining the "spaces" between the pulses, and Vm a voltage level defining the "marks" or the pulses themselves. The pulses are shown with near perfect square edges, although this is an approximation and the edges of the pulses in reality would be less sharp.

Referring to Figure 3B, in order to transmit binary data the mark can be binary encoded, such that it can be either of two different lengths, one of which corresponds to the binary value 0 and the other of which corresponds to the binary value 1. The length (in time) of the mark corresponding to binary 0 is 500 µS and the length of the mark corresponding to binary 1 is 750 µS. The length of the space is fixed at 500 µS.

With this system the average rate of data transmission is 1 bit every 1125 µS. The average baseband carrier frequency, which is a reflection of the number of transitions between Vs and Vm per unit time, is 888 Hz.

Referring now to Figure 3C, the data rate can be increased by binary encoding both the mark and the space, so that each of the mark and space can be one of two lengths corresponding to binary 0 and binary 1. Again a length of 500 µS represents binary 0 and a length of 750 µS represents binary 1. Since the spaces are also used to denote bits of information, fewer transitions are needed and the average data rate becomes 1 bit every 625 µS (a 180% increase) whilst the average baseband carrier frequency reduces to 800 Hz (a 10% decrease).

Figure 3D which represents the system used in the preferred embodiment of the present invention, shows this idea developed a stage further, wherein both the mark and the space are quaternary encoded. This means that each of the mark and space may take one of four lengths, or binary values. A length of 500 µS corresponds to binary 00, a length of 750 µS corresponds to binary 01, a length of 1000 µS corresponds to binary 10, and a length of 1250 µS corresponds to a binary 11. In this case the average data rate becomes 1 bit every 437.5 µS (an increase of 257% over the basic binary encoding of the mark only) and the average baseband carrier frequency becomes 571 Hz (a decrease of 35%).

This system has been found to be most efficient since taking the idea further and encoding each mark/space with 3 bits of data, ie. 000,001,010 etc. would require a much larger average mark/space length which would decrease efficiency.

The levels of Vm and Vs have also been advantageously reduced as compared with values used in prior systems, in order that any effects of radio frequency interference might be reduced.

As has been described above the control panel modulates the loop voltage when communicating with devices on the loop. When replying to messages the devices themselves do so by modulating the loop current.

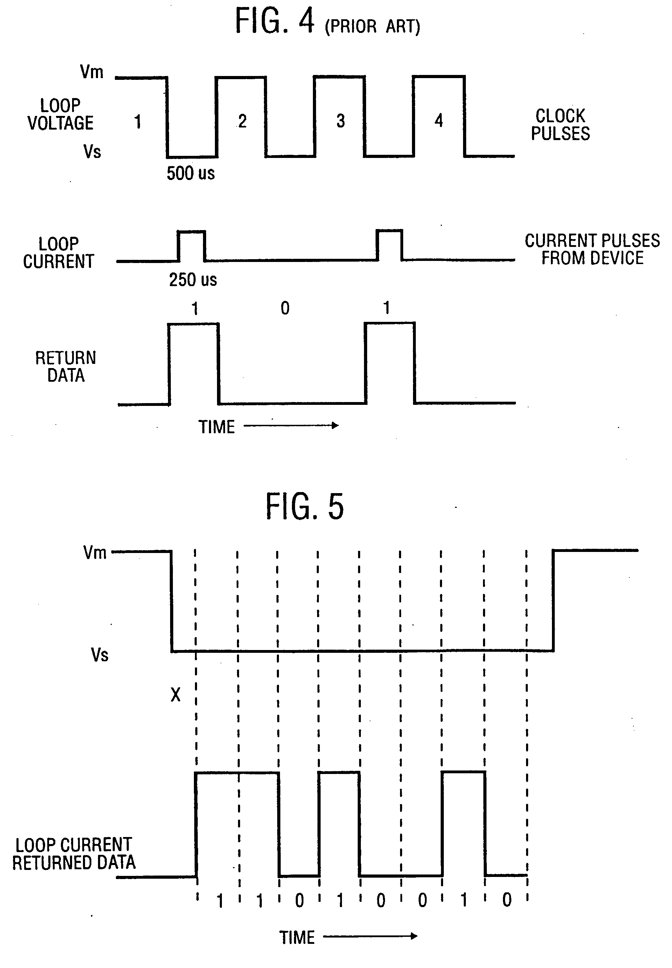

In prior art systems the return data from the devices is synchronised by clock pulses which are supplied as voltage pulses from the control panel. Figure 4 shows, schematically, such a prior art system. In the spaces between the clock pulses of the control panel the device may produce narrower current pulses which are interpreted as binary returned data bits. This system is inefficient because the clock pulses contain no information themselves, they are present because their spaces are used for synchronising the return data. This means that the overall information flow rate is relatively low. The reason that the reply current pulses cannot be the same width as the clock pulses themselves is because it is necessary to allow all the capacitances and inductances on the loop to discharge before the current pulses are made, since no other appreciable current must be flowing in the loop when the reply pulses are made.

A preferred system is as represented schematically in Figure 5. The return data is not continuously re-synchronised after every bit. Instead the return data is synchronised initially at the trailing edge X of the voltage signal and then the return data current pulses commence shortly thereafter (ie. after suitable time has elapsed for capacitances and inductances to discharge). The device returning the data has its own clock source which is accurate enough to return all 8 bits (or more if necessary) of data in a continuous synchronised stream. After the 8 bits of return data have been transmitted, the voltage signal changes from the control panel signalling the end of the period for response. The total time taken to return 8 bits of data using this system is 2.25 mS which represents an increase of 355% in data transmission rate over the prior system. The preferred system therefore provides the benefits of an increased information flow rate, a reduction in power losses since no energy is wasted by producing synchronising voltage pulses, and the absence of synchronising voltage pulses means a reduction in the effects of radio frequency interference.

In addition, the return data can be quaternary encoded in a similar way to that described above in relation to the voltage modulated signal from the control panel. This would further enhance the above benefits.

Each device on the loop is programmed with a unique identity code at manufacture. The identity code comprises a unique 24 bit serial number. This information, together with other data such as the batch number, the date and time of manufacture, is also recorded on a database. Details of any device which is subsequently found to be faulty are included in the database. This permits accurate centralised records to be kept on all devices produced. In addition, any modifications and batch faults are accurately recorded so that, for example, an engineer can check on site whether a particular device has a known fault. During installation, and commissioning of the system each device's serial number is recorded on the site drawing along with group address codes for groups of devices which may be required to be addressed together and to act together eg. in the case of an alarm condition. The commissioning engineer logs this information into a memory of the control panel and when commissioning of the system is complete a permanent record of the information is made along with any other relevant information which is specific to that particular installation, such as the location of each device (the so-called "map" of the loop) and the programmed operation of the alarm system.

This information is then transferred to a computerised log kept in the service department of the installation company. Some benefits of this procedure are that, since information about each site is at hand at the installation company, no installation may ever completely lose valuable, potentially life-saving information eg. after a complete system failure. The system can be reprogrammed to work as before using the stored data. Also any modification to the system can be easily recorded and up-dated as necessary. A further benefit of this procedure is that easy access to relevant servicing information can be obtained to enable more accurate estimates of servicing costs. In addition the system itself can be completely designed and programmed at the installation company and the information then transferred to the site after installation.

During normal operation the control panel communicates with each device using its unique 24 bit serial number. This obviates the need for the generation of a corresponding shorter 8 bit address code for use in communication. The reason that it is not necessary to have an 8 bit short address for communication purposes between a control panel and the device is that using the quaternary encoding system described above, the information flow rate is sufficiently good to allow communication with the 24 bit serial number. This was previously too large and cumbersome for routine communication. Each device may still be allocated a shorter address number for ease of reference by the user. The shorter number can be stored within the control panel for identification purposes.

The unique 24 bit serial number may be manually recorded in the control panel during installation or may alternatively be recorded automatically by the control panel by interrogation of each device.

For safety reasons it is necessary to make a provision whereby a loop device can request an immediate communication with the control panel. In the case of a fire detection system this will, for example, permit the control panel to immediately respond to a priority device such as a manual call point, without having to wait for the routine interrogation of that device in the normal addressing sequence.

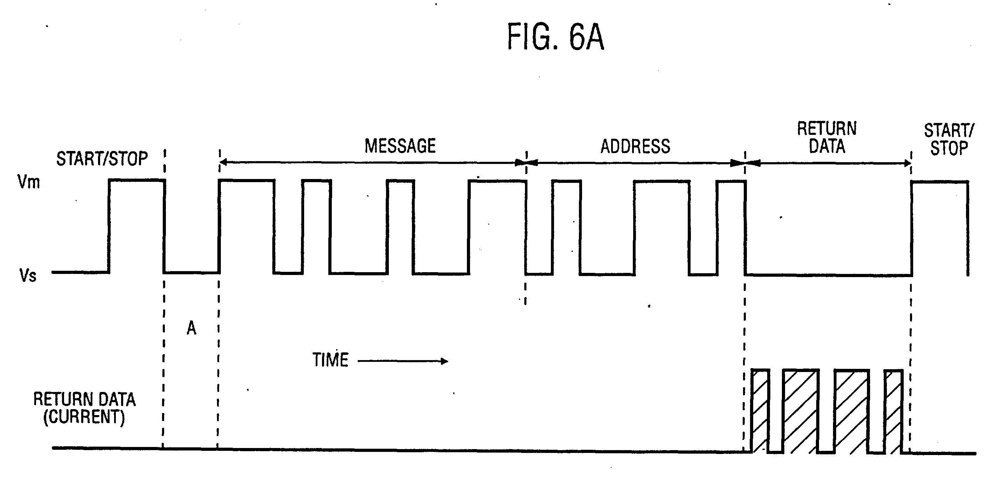

Referring to Figure 6A, to achieve this facility the control panel normally communicates with each device in turn and in between each cycle the control panel monitors the loop current at point A in the cycle. If any device is in a priority condition, eg. such as a manual call point which has been activated, a priority input request circuit, which is present in each device, generates a current pulse at time A which is detected by the control panel. In Figure 6A no such priority signal has been produced and the control panel continues to scan the devices on the loop sequentially.

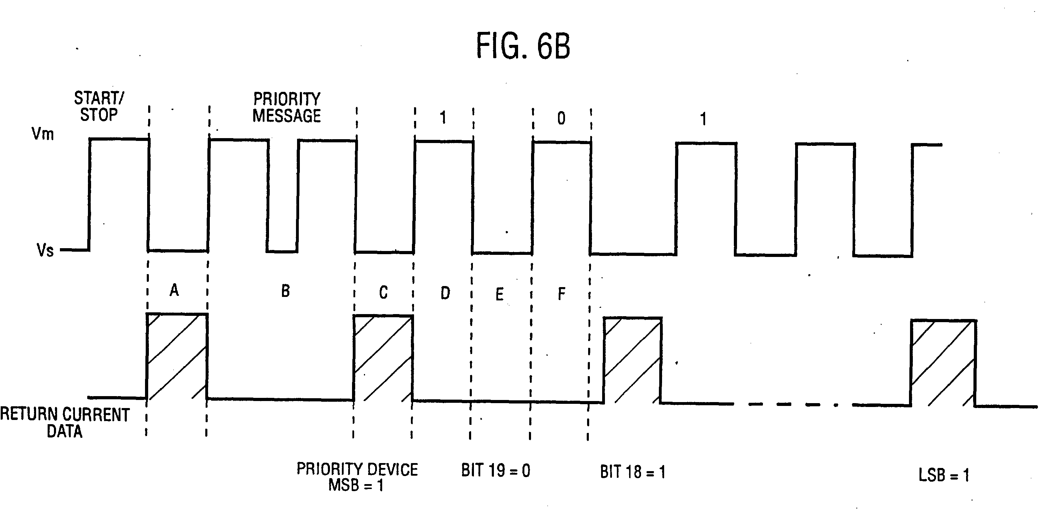

Figure 6B shows, schematically, what happens when a device goes into a priority condition. At A the priority device requests priority communication. There may be more than one device making this request. The control panel detects this priority request and at B sends a priority message informing all devices on the loop that a search sequence for the priority device(s) is about to begin. From this time only devices which are in a priority condition are able to respond.

Firstly each priority-condition device reads the most significant bit (MSB) of its address code and signals the value of this bit to the control panel at C. The control panel monitors this and responds by transmitting down the loop the value of this bit (ie. in this case 1) at D. Each priority device monitors D and compares this with its own MSB. If a particular device has an MSB which matches this value transmitted by the control panel then that device proceeds to transmit its next MSB at E (in this case 0) and monitors the acknowledgement from the control panel at F.

Each priority-condition device will continue with this procedure until either there is a no-match situation, in which case the device will drop out of the sequence, or all its bits have been "exchanged" with the control panel. At the end of the sequence the control panel will have received an address of a priority device. The control panel can then address this device in the normal way to verify the signal and then disable the priority input request circuit of that device so that other priority devices can be identified in a subsequent sequence.

In the case of simultaneously activated priority devices the following sequence of events takes place:
1. The control panel will identify the priority device having the highest address code first.
2. The control panel will verify and latch this event.
3. The control panel then disables the priority input request circuit of that device so that it can not respond in a future priority sequence.
4. The control panel responds to the priority device by taking necessary action (eg. activation of alarm, sprinklers etc.).
5. The control panel then searches for the next device on the loop which has a priority condition.

This system has several advantages over prior systems. Firstly the activated priority-condition device communicates its address to the control panel. This means that the control panel need not search all the similar priority-type devices on the loop to find the source of the priority signal which means that the time taken for the control panel to respond to the priority device is independent of the number of those kinds of device present on the loop. Secondly the system always yields a valid address of a priority-condition device in one scan of the loop, irrespective of the number of simultaneous priority events. Thirdly there is no corruption of priority addresses caused by simultaneously activated priority-condition devices. Fourthly an activated priority-condition device will continue to request priority service until the control panel can respond, verify the action and disable its priority input request circuit. This means that the control panel can decide to suspend a response if for example, a more urgent function is currently in progress, such as the switching on of an alarm sounder.

Apart from knowing a unique serial number for each device on the loop, it is advantageous for the control panel to know the order in which the devices are connected to the loop. In addition, it is useful for the control panel to know whether a particular device is located on the main loop or on a spur or branch of the loop. This kind of information is useful because it enables the control panel to know, for example, whether a device has been removed for cleaning and replaced incorrectly or in the wrong place on the loop.

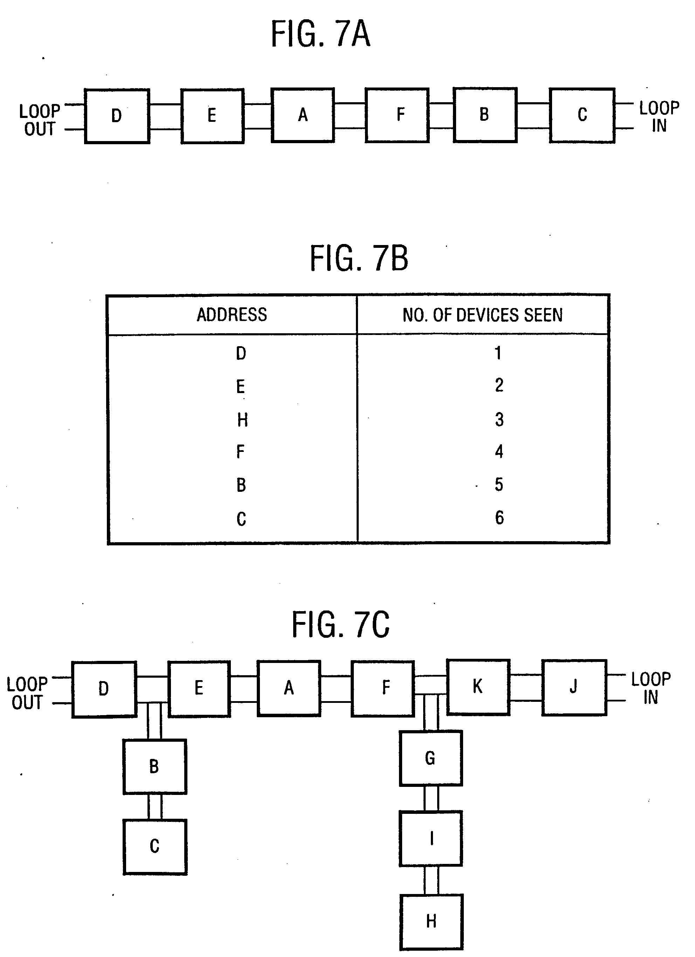

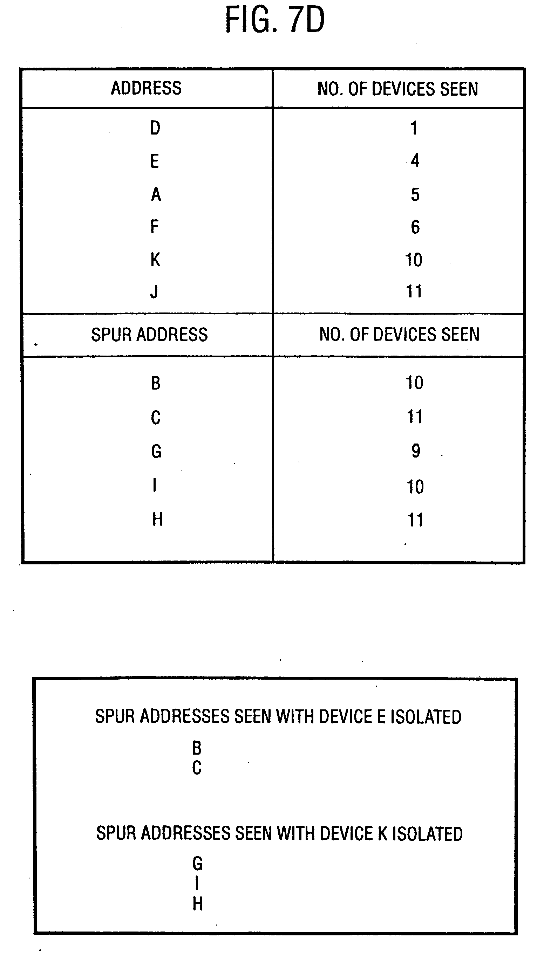

Referring to Figure 7a, this shows a loop configuration. To "map", or accurately log the location of, each device on the loop the control panel does the following:

Firstly the control panel communicates with each device using its unique address and requests that each device in turn opens its isolator. Each device has an isolator which, when opened, renders the rest of the circuit open, ie. the circuit is broken after that device. The loop is then scanned by the control panel and the number of devices seen by the control panel is recorded. Figure 7b shows a table of device addresses obtained by the control panel using the above procedure. The control panel is able to identify the precise location in the loop of each of the devices A to F.

Figure 7c shows a more complex loop having two spurs. Again the sequence is:

Firstly the control panel requests that each device in turn opens its isolator. Then the loop is scanned and the number of devices seen is recorded. The control panel then knows whether a particular device is on a spur, since if a spur device opens its isolator the control panel will still "see" a closed-circuit loop. If the tested device is not on a spur then its address is stored in the wiring table at a location off-set by the number of devices seen. If the device tested is on a spur (ie. the loop is not open-circuit), it is stored in the spur table to be processed later. After all devices have been processed then the spurs are processed. When there are spurs on a loop the number of devices "seen" should increment by one until a spur is reached. Then the next increment shows how many devices are on the spur. In order to find their addresses then the next device not on the spur is opened and any devices seen which are in the spur table belong at that spur.

As well as allowing wiring orientation to be verified there are other advantages with a mapping system such as this which is performed during initial commissioning of the system. For example the system may still offer the same degree of protection against fires since if devices of the same kind are swapped inadvertently, then in the event of a fire alarm the control panel can adjust its instructions so that the proper sequence may still be initiated.

If it is required for an engineer to verify the address/serial number of a device on the loop, the control panel enters an "inspection mode" and signals to each device a "display address" message. When the devices receive this message they each visually display their unique address by pulsing their integral alarm confirmation light emitting diodes (LED). The alarm confirmation LEDs are normally used to visually confirm the existence of an alarm condition, but when the devices are asked by the control panel to display their address, those addresses are encoded as a series of pulses on the integral LEDs. This information can then be read by an engineer in situ without the need for a special reading tool and without having to disconnect the device from the system. The sequence used by the device to display its address using its integral LED is as follows:
1. Wait 2 seconds (LED off).
2. Pulse LED (on 0.25s/off 0.25s) corresponding to the number of "hundreds". If there are no "hundreds" pulse the LED on for 1.5 seconds.
3. Wait 1 second (LED off).
4. Pulse LED corresponding to the number of "tens" as per Step 2.
5. Wait 1 second (LED off).
6. Pulse LED corresponding to number of "units" as per Step 2.

This sequence is repeated for as long as the control panel signals a "display address" message.

## Claims

1. A detection system for detecting an alarm condition, the detection system comprising control means (10) and at least one detection means (11), the control means (10) and the detection means (11) being arranged, in use, to communicate with each other electronically at least partly by means of a digital signal comprising a number of electrical pulses and a number of spaces between the pulses characterised in that at least some of the pulses and the spaces in the digital signal are arranged to be one of four different lengths, which four different lengths represent the binary numbers 00, 01, 10 and 11.

2. A detection system according to claim 1 wherein the lengths of at least some of the spaces in the signal are arranged to represent bits of data.

3. A detection system according to claim 1 or claim 2 wherein at least some of the pulses and/or the spaces are arranged to be of different lengths, which lengths represent binary numbers.

4. A detection system according to any of claims 1 to 3, wherein at least some of the pulses and/or the spaces may be arranged to be one of more than four different lengths, which different lengths represent different binary numbers.

5. A detection system according to any of claims 1 to 4, wherein at least some of both the pulses and the spaces are arranged to be one of four different lengths, the four different lengths representing the binary numbers 00, 01, 10 and 11.

6. A detection system according to any of claims 1 to 5, wherein the pulses are formed by transitions between values of an electrical parameter.

7. A detection system according to any of claims 1 to 6, wherein the control means (10) communicates with the detection means by means of a signal comprising pulses formed by transitions between levels of voltage in a transmission line extending between the control means (10) and the detection means (11).

8. A detection system according to any of claims 1 to 7, wherein the detection means (11) communicates with the control means (10) by means of a signal comprising pulses formed by transitions between levels of electrical current flowing in a transmission line between the control means (10) and the detector means (11).

9. A detection system according to any of claims 1 to 8, wherein there is a plurality of detection means (11) in communication with the control means (10).

10. A detection system according to any of claims 1 to 9, wherein the control means (10) communicates with the detection means (11) to monitor values of a parameter detected by the detection means (11).

11. A detection system according to any of claims 1 to 10, wherein the control means (10) communicates with the detection means (11) to monitor a condition of the detection means (11).

12. A detection system according to any of claims 1 to 11, wherein the control means (10) communicates with the detection means (11) by means of a signal, which signal comprises a message and an identification code of the detection means (11).

## Patentansprüche

1. Erkennungssystem zum Feststellen einer Alarmbedingung, wobei das Erkennungssystem eine Steuereinrichtung (10) und wenigstens eine Detektoreinrichtung (11) umfaßt, wobei die Steuereinrichtung (10) und die Detektoreinrichtung (11) in der Verwendung derart angeordnet sind, daß sie elektronisch wenigstens teilweise mit Hilfe eines digitalen Signals miteinander kommunizieren, das eine Anzahl von elektrischen Impulsen und eine Anzahl von Abständen zwischen den Impulsen umfaßt, dadurch gekennzeichnet, daß wenigstens einige der Impulse und der Abstände in dem digitalen Signal derart angeordnet sind, daß sie eine von vier unterschiedlichen Längen bilden, wobei die vier unterschiedlichen Längen die Binärzahlen 00, 01, 10 und 11 wiedergeben.

2. Erkennungssystem nach Anspruch 1, wobei die Längen von wenigstens einigen der Abstände im Signal angeordnet sind, um Datenbits wiederzugeben.

3. Erkennungssystem nach Anspruch 1 oder 2, wobei wenigstens einige der Impulse und/oder der Abstände angeordnet sind, um unterschiedliche Längen zu bilden, wobei die Längen Binärzahlen wiedergeben.

4. Erkennungssystem nach wenigstens einem der Ansprüche 1 bis 3, wobei wenigstens einige der Impulse und/oder der Abstände angeordnet werden können, um eine von mehr als vier unterschiedlichen Längen zu bilden, wobei die unterschiedlichen Längen unterschiedliche Binärzahlen wiedergeben.

5. Erkennungssystem nach wenigstens einem der Ansprüche 1 bis 4, wobei wenigstens einige der Impulse und der Abstände angeordnet sind, um eine von vier unterschiedlichen Längen zu bilden, wobei die vier unterschiedlichen Längen die Binärzahlen 00, 01, 10 und 11 wiedergeben.

6. Erkennungssystem nach wenigstens einem der Ansprüche 1 bis 5, wobei die Impulse durch Übergänge zwischen den Werten eines elektrischen Parameters gebildet werden.

7. Erkennungssystem nach wenigstens einem der Ansprüche 1 bis 6, wobei die Steuereinrichtung (10) mit der Detektoreinrichtung mit Hilfe eines Signals kommuniziert, das Impulse umfaßt, die durch Übergänge zwischen Spannungspegeln in einer Übertragungsleitung gebildet werden, welche sich zwischen der Steuereinrichtung (10) und der Detektoreinrichtung (11) erstreckt.

8. Erkennungssystem nach wenigstens einem der Ansprüche 1 bis 7, wobei die Detektoreinrichtung (11) mit der Steuereinrichtung (10) mit Hilfe eines Signals kommuniziert, welches Impulse umfaßt, die durch Übergänge zwischen elektrischen Strompegeln gebildet werden, welche in einer Übertragungsleitung zwischen der Steuereinrichtung (10) und der Detektoreinrichtung (11) fließen.

9. Erkennungssystem nach wenigstens einem der Ansprüche 1 bis 8, wobei eine Vielzahl von Detektoreinrichtungen (11) mit der Steuereinrichtung (10) kommuniziert.

10. Erkennungssystem nach wenigstens einem der Ansprüche 1 bis 9, wobei die Steuereinrichtung (10) mit der Detektoreinrichtung (11) kommuniziert, um die Werte eines durch die Detektoreinrichtung (11) festgestellten Parameters zu überwachen.

11. Erkennungssystem nach wenigstens einem der Ansprüche 1 bis 10, wobei die Steuereinrichtung (10) mit der Detektoreinrichtung (11) kommuniziert, um einen Zustand der Detektoreinrichtung (11) zu überwachen.

12. Erkennungssystem nach wenigstens einem der Ansprüche 1 bis 11, wobei die Steuereinrichtung (10) mit der Detektoreinrichtung (11) mit Hilfe eines Signals kommuniziert, das eine Nachricht und einen Identifikationscode der Detektoreinrichtung (11) umfaßt.

## Revendications

1. Système de détection destiné à détecter un état d'alarme, le système de détection comprenant des moyens de commande (10) et au moins un moyen de détection (11), les moyens de commande (10) et les moyens de détection (11) étant agencés, en utilisation, pour communiquer les uns avec les autres électroniquement au moins partiellement au moyen d'un signal numérique comprenant un certain nombre d'impulsions électriques et un certain nombre d'espaces entre les impulsions, caractérisé par le fait qu'au moins certaines des impulsions et des espaces se trouvant dans le signal numérique sont agencé(e)s pour avoir l'une de quatre longueurs différentes, les quatre longueurs différentes représentant les nombres binaires 00, 01, 10 et 11.

2. Système de détection selon la revendication 1, dans lequel les longueurs d'au moins certains des espaces du signal sont agencées pour représenter des bits de données.

3. Système de détection selon la revendication 1 ou la revendication 2, dans lequel au moins certain(e)s des impulsions et/ou des espaces sont agencé(e)s pour être de longueurs différentes, ces longueurs représentant des nombres binaires.

4. Système de détection selon l'une quelconque des revendications 1 à 3, dans lequel au moins certain(e)s des impulsions et/ou des espaces peuvent être agencé(e)s pour être d'une ou plusieurs parmi quatre longueurs différentes, des longueurs différentes représentant des nombres binaires différents.

5. Système de détection selon l'une quelconque des revendications 1 à 4, dans lequel certain(e)s des impulsions et des espaces, ou des deux, sont agencé(e)s pour être de l'une parmi quatre longueurs différentes, les quatre longueurs différentes représentant les nombres binaires 00, 01, 10 et 11.

6. Système de détection selon l'une quelconque des revendications 1 à 5, dans lequel les impulsions sont formées par des transitions entre des valeurs d'un paramètre électrique.

7. Système de détection selon l'une quelconque des revendications 1 à 6, dans lequel les moyens de commande (10) communiquent avec les moyens de détection au moyen d'un signal comprenant des impulsions formées par des transitions entre des niveaux de tension dans une ligne de transmission s'étendant entre les moyens de commande (10) et les moyens de détection (11).

8. Système de détection selon l'une quelconque des revendications 1 à 7, dans lequel les moyens de détection (11) communiquent avec les moyens de commande (10) à l'aide d'un signal comprenant des impulsions formées par des transitions entre des niveaux de courant électrique passant dans une ligne de transmission entre les moyens de commande (10) et les moyens détecteurs (11).

9. Système de détection selon l'une quelconque des revendications 1 à 8, dans lequel il y a une pluralité de moyens de détection (11), en communication avec les moyens de commande (10).

10. Système de détection selon l'une quelconque des revendications 1 à 9, dans lequel les moyens de commande (10) communiquent avec les moyens de détection (11) pour surveiller des valeurs d'un paramètre détectées par les moyens de détection (11).

11. Système de détection selon l'une quelconque des revendications 1 à 10, dans lequel les moyens de commande (10) communiquent avec les moyens de détection (11) pour surveiller une condition des moyens de détection (11).

12. Système de détection selon l'une quelconque des revendications 1 à 11, dans lequel les moyens de commande (10) communiquent avec les moyens de détection (11) au moyen d'un signal, ce signal constituant un message et un code d'identification des moyens de détection.
